# EUROPÄISCHE PATENTANMELDUNG

(11) **EP 1 918 267 A2**
(43) Veröffentlichungstag der Anmeldung: **07.05.2008**
(21) Anmeldenummer: 07020694.1
(22) Anmeldetag: 23.10.2007
(51) Int. Cl.: C05G 1/00, C05G 5/00

(54) **Verfahren zur Herstellung von Strukturkörpern aus organishen und mineralischen Düngerkomponenten und Strukturkörper dazu**

(30) Priorität: 26.10.2006 DE 102006051010
(71) Anmelder: Wehling Anlagen-und Maschinenbau GmbH, 39387 Oschersleben (DE)
(72) Erfinder: Schmid, Karl, Dr.-Ing., 39218 Schönebeck (DE); Tschirner, Erhard, Dr., 06366 Köthen (DE); Wehling, Matthias, 393878 Oschersleben (DE)
(74) Vertreter: Neuhäuser, Uwe

(57) **Zusammenfassung**

Die Aufgabe, ein verbessertes Verfahren zur Herstellung von Strukturkörpern (1) aus organischen und mineralischen Düngerkomponenten anzugeben, welches einfach und kostengünstig durchführbar ist sowie gestattet, mineralische und organische Ein- und/oder Mehrstoffdünger zu formstabilen Körpern zu verarbeiten, die zum einen nachhaltig lager- und transportfähig sind sowie mit handelsüblicher Streutechnik ausgebracht werden können und zum anderen eine temporäre Steuerbarkeit der Nährstoffabgabe an die Pflanzen in Abhängigkeit von den unterschiedlichen Vegetationszyklen gewährleisten, wird im Wesentlichen dadurch gelöst, dass während des Pressens des organisch-mineralischen Stoffgemisches eine teilweise Lösung der mineralischen Düngesalze (3) im Restwasser der Organik und einem etwaige zugegebenen flüssigen Härtemittel (4) erfolgt, an den Kreuzungspunkten (5) der organischen Fasern (2) und an der Oberfläche (6) derselben Salzionen (3a) angelagert und Salzbrücken (7) geschaffen werden und ungelöste Düngesalze (3b) in Hohlräume (8) und/oder Beabstandungen zwischen den organischen Fasern (2) eingelagert werden.

## Beschreibung

Die Erfindung betrifft ein Verfahren zur Herstellung von Strukturkörpern aus organischen und mineralischen Düngerkomponenten sowie einen Strukturkörper dazu nach den Merkmalen des Anspruchs 1 bzw. 13.

Die derzeit überwiegend angewandte Methode der Düngung im intensiven Pflanzenanbau ist durch ein zwei- bis fünfmaliges Ausbringen gängiger mineralischer Düngerkomponenten, wie Stickstoff-, Phosphat-, Kalium- u. a. Komponenten gekennzeichnet, um eine ausreichende Versorgung der Fruchtarten mit Nährstoffen über die zeitlich unterschiedlichen Vegetationsperioden zu gewährleisten.

Diese meist durch Rollgranulation besser handhabbar gemachten oder auch in gelöster flüssiger Form ausgebrachten Dünger haben den Nachteil, dass ihre Wirkung keine volle Vegatationsperiode abdecken kann. Es sind mehrmalige Überfahrten über den Acker notwendig, welches mit erhöhten Kosten einhergeht. Ferner erreichen nicht alle ausgebrachten Nährstoffe die Pflanzenwurzeln, stehen demgemäß denselben nicht zur Verfügung und können überdies zu nachteiligen Überdüngungseffekten mit den allgemein bekannten Schädigungen von Grund- und Oberflächenwasser führen.

Um diesem Problem zu begegnen, wurde in der Praxis versucht, oben bereits erwähnte Rollgranulate zu verbessern, indem ähnlich wie in der medizinischen Anwendung dieselben mit unterschiedlichen Umhüllungsschichten ausgebildet sind, die sich zeitlich unterschiedlich auflösen sollen, jedoch ebenfalls nicht die notwendige Wirkungsdauer, die einer vollen Vegetationsperiode entspricht, erreichen.

Weiter wurde durch die Fachwelt vorgeschlagen, nach einem sogenannten Cultan-Verfahren flüssige Düngerkomponenten dosiert in den Boden und direkt an die Pflanzen zu verbringen. Bei Regenbefall hat sich dieses Verfahren als unzweckmäßig erwiesen.

Weiter wurde vorgeschlagen, sogenannte Kern-Hülle-Strukturen aus Düngekomponenten in Anwendung zu bringen. So sind aus der DE 198 44 352 A1 eine Düngemittel und ein Verfahren zur Herstellung desselben bekannt, wobei im Wesentlichen vorgesehen ist, dass ein körniges Düngemittel, welches über feste Partikel verfügt, aus einem Kern und einer denselben umhüllenden Schicht aus einem Chitin oder einem chitinhaltigen Stoff besteht.

Die DE 38 29 938 A1 offenbart ferner einen organo-mineralischen Dünger sowie ein Verfahren zu seiner Herstellung, wobei eine Mischung, bestehend aus einem stabilisierten Kompost, bei dem die leichter abbaubaren Bestandteile aerob abgebaut sind, aus mineralischen Zuschlagstoffen und aus biologisch-chemisch abbaubaren organischen Vernetzungsmitteln, gepresst oder anderweitig geformt wird, erhitzt wird und abgekühlt wird. Als organisches Vernetzungsmittel wird ein Polymer auf Polybutatien-Basis vorgeschlagen. Anschließend werden die Pellets, eine Kem-Hülle-Struktur ausbildend, mit dem Vernetzungsmittel angesprüht, so dass ein Vernetzungsfilm ersteht, und für 15 bis 30 Minuten auf 70°C erhitzt. Durch diese Maßnahme soll der Dünger streufähig gehalten werden und eine Feuchtigkeitsanlagerung bei der Lagerung verhindert werden.

Auch mit der DE 10 2004 019 814 A1 wird eine Kern-Hülle-Struktur, hier als Depotgefäß bezeichnet, vorgeschlagen, welches aus einem organischen Trägerstoff, vermischt mit Pflanzennährstoffen, vorzugsweise mineralischen und/oder organischen Nährstoffen, besteht. Dieser Trägerstoff wird zu einem zylindrischen Füllkörper geformt und mit einer stabilen Körperwand versehen. Die Außenzone = Körperwand ist so gestaltet, dass deren Auflösung und die Freigabe der Pflanzennährstoffe dosiert, d. h., zeitlich gesteuert, erfolgt, wodurch eine optimale Versorgung der Pflanzen über Vegetationszeiträume von 2 bis 8 Monaten ermöglicht und Überdüngungen vermieden werden sollen.

Mit der DE 10 2004 019 815 A1 werden des Weiteren ein Verfahren und eine Vorrichtung zur Herstellung von besagten Dünge-Depotgefäßen offenbart. Im Wesentlichen ist vorgesehen, mittels eines Extrusionsapparates zunächst Pellets aus Mist, Kompost und anderen biologischen Rohstoffen, vermischt mit Düngezusatzstoffen sowie Gleit- und Härtezusätzen, herzustellen und nachfolgend die Oberfläche der Pellets durch direkte Erwärmung ggf. mit nachgeschalteter Wirbelschichttrocknung zu härten, wodurch ebenfalls eine Kern-Hülle Struktur erzielbar ist. Weiter wird in dieser Druckschrift angegeben, dass das Ausgangsmaterial respektive das Trägermaterial einen Feuchtegehalt von 20 bis 30 % aufweist, wodurch die Pelletierung erst ermöglicht, die Zerkleinerung langfasrigen Materials gewährleistet und die Zumischung der Zusatzstoffe sowie die nachfolgenden Verfahrensschritte gestattet sein sollen.

Aus der DE 10 2004 057 841 A1 sind ferner ein Formkörper zum Düngen sowie ein Verfahren zur Herstellung desselben bekannt, wobei der Formkörper eine Kern-Hülle-Struktur aufweist, bei der die Hülle mit einer Haut und/oder Netzstruktur maximal 1 mm dick ist und eine Restfeuchte P 17 Gewichts-%, vorzugsweise 10 bis 17 Gewichts-%, aufweist, wohingegen die Restfeuchte im Kern 20 Gewichts-% bis 25 Gewichts-% beträgt.

All den vorstehenden, Kern-Hülle-Strukturen favorisierenden Lösungen ist gemein, dass diese mit erhöhtem Aufwand zur Herstellung derselben einhergehen. Des Weiteren wird die Standfestigkeit derselben während der Lagerung und des Transports als kritisch beurteilt.

Demgegenüber ist aus der EP 0 597 417 A1 ein Dünger bekannt, der aus einem Gemisch aus Kompost und einem mineralischen oder organischen Dünger besteht, nach dem Vermischen der Bestandteile zu Pellets oder Granulaten verarbeitet ist, die anschließend gekühlt und/oder getrocknet wurden, wobei der Kompostanteil des Düngers zwischen 30 und 70 % liegt und der Anteil des mineralischen oder organischen Düngers um 40 bis 60 % geringer ist als der Düngerbedarf (D) pro Hektar der zu düngenden Pflanzen, wobei besagter Düngerbedarf (D) nach der Beziehung D=D_{P}-D_{B} zu errechnen ist, und wobei D_{P} für den pro ha erforderlichen Bedarf der Pflanzen an einem bestimmten Nährstoff und D_{B} für das pro ha vorliegende Angebot des Bodens an diesem Nährstoff stehen. Durch diese Maßnahme soll bei gleicher Ertragsleistung verglichen mit herkömmlichen mineralischen Düngern der Anteil an mineralischem oder organischem Dünger wesentlich reduziert werden. Ob diese Maßnahme von Erfolg gekrönt ist, mag dahingestellt bleiben. Ungeachtet dessen haben sich derartige Pellets oder Granulate als biologisch instabil erwiesen und erlauben fernerhin keine Steuerung des Auflöseverhaltens. Auch sind derartige Pellets oder Granulate nicht ausreichend formstabil und demgemäß lager- sowie transportfähig.

Hiervon ausgehend ist es Aufgabe der vorliegenden Erfindung, ein verbessertes Verfahren zur Herstellung von Strukturkörpern aus organischen und mineralischen Düngerkomponenten anzugeben, welches einfach und kostengünstig durchführbar ist sowie gestattet, mineralische und organische Ein- und/oder Mehrstoffdünger zu formstabilen Körpern zu verarbeiten, die zum einen nachhaltig lager- und transportfähig sind sowie mit handelsüblicher Streutechnik ausgebracht werden können und zum anderen eine temporäre Steuerbarkeit der Nährstoffabgabe an die Pflanzen in Abhängigkeit von den unterschiedlichen Vegetationszyklen gewährleisten. Ebenfalls ist es Aufgabe der Erfindung, einen entsprechenden Strukturkörper zu schaffen.

Die Lösung dieser Aufgabe ergibt sich aus den Merkmalen der nebengeordneten Ansprüche 1, 13 und 25, während vorteilhafte Ausgestaltungen und Weiterbildungen der Erfindung den jeweiligen Unteransprüchen entnehmbar sind.

Demnach wird die Aufgabe zunächst durch ein Verfahren zur Herstellung von Strukturkörpern aus organischen und mineralischen Düngerkomponenten mit folgenden nacheinander durchzuführenden Verfahrensschritten gelöst:
a) Mischung zumindest einer organischen Düngerkomponente, die ihrerseits organische Fasern enthält, mit zumindest einer mineralischen Düngerkomponente;
b) Pressen des gebildeten Stoffgemisches, wobei bereits bei Erstellung der Mischung gemäß Verfahrensschritt a) und/oder während des Pressvorganges der Mischung ein flüssiges und/oder pulverförmiges Härtemittel derart zugegeben wird, dass während des Pressvorganges eine teilweise Lösung der mineralischen Düngesalze der zumindest einen mineralischen Düngerkomponente im Restwasser der Organik und des etwaigen flüssigen Härtemittels erfolgt und wenigstens an den Kreuzungspunkten, vorzugsweise an den Kreuzungspunkten und auf der Oberfläche der organischen Fasern Salzionen der mineralischen Düngerkomponente angelegt und Salzbrücken geschaffen werden, die eine stabile Trägerstruktur für die Düngerkomponenten derart bilden, dass in gebildete Hohlräume und/oder Beabstandungen zwischen den organischen Fasern ungelöste Düngesalze respektive Salzkristalle der zumindest einen mineralischen Düngerkomponente eingelagert werden;
c) Erstellung handelsüblicher Strukturkörper respektive Pellets oder Granulate durch geeignete Teilung und Formgebung des erzeugten Stoffgemisches; und
d) Kühlung und/oder Trocknung der erstellten Strukturkörper.

Entgegen der durch die Fachwelt zwischenzeitlich favorisierten Kern-Hülle-Strukturen stellt die vorliegende Erfindung auf die an sich bekannte Pressgranulierung bzw. Pelletierung ab, wobei die Pellets bzw. Granulate im Hinblick auf den Stand der Technik bzw. im Hinblick auf herkömmliche Pellets bzw. Granulate in ihrer Beschaffenheit nunmehr derart verbessert sind, dass diese zum einen nachhaltig lager- und transportfähig sind sowie mit handelsüblicher Streutechnik ausgebracht werden können und zum anderen eine temporäre Steuerbarkeit der Nährstoffabgabe an die Pflanzen in Abhängigkeit von den unterschiedlichen Vegetationszyklen gewährleisten. Im Wesentlichen ist dieses Ergebnis durch die besondere sowie stabile Anlagerung von Düngesalzen an überwiegend organisches Trägermaterial erzielt.

In vorteilhafter Weiterbildung des Verfahrens wird im Hinblick auf den Verfahrensschritt a) vorgeschlagen, dass die verwendete zumindest eine organische Düngerkomponente vor Mischung mit der zumindest einen mineralischen Düngerkomponente auf eine Restfeuchte von etwa 10 Gewichts-% bis etwa 12 Gewichts-% durch Trocknung oder Befeuchtung eingestellt wird.

Im Hinblick auf den Verfahrensschritt a) können dabei vorteilhafterweise als organische Düngerkomponenten Geflügel-, Schweine-, Rinderdung, Gärreste aus Biogasanlagen o. a., Stroh, Kompost, wie reine Komposte aus organischen Abfällen, und/oder Substrate von Pilzkulturen verwendet werden.

Im Hinblick auf den Verfahrensschritt a) können als mineralische Düngerkomponenten Stickstoff/(N)-Komponenten, Phosphat/(P₂O₅)-Komponenten und/oder Kalium/(K₂O)-Komponenten verwendet werden.

Weiter kann es angezeigt sein, dass im Hinblick auf den Verfahrensschritt a) in die Mischung Zumengen von Magnesium/(Mg)- und/oder Schwefei/(S)-Komponenten und/oder diversen Spurenelementen gegeben werden.

Des Weiteren ist vorgesehen, dass im Hinblick auf den Verfahrensschritt a) die organischen Fasern der zumindest einen organischen Düngerkomponente durch Zellstoff/Lignin-Fasern gebildet werden.

Im Hinblick auf den Verfahrensschritt b) kann vorteilhaft ein Härtemittel auf Eiweiß-, Stärke-, Zucker-, Zellulose- und/oder Ligninbasis verwendet werden.

Im Hinblick auf den Verfahrensschritt b) können auch aktive Mikroorganismen und/oder deren Dauerformen beigemischt werden.

Im Hinblick auf den Verfahrensschritt d) werden die erstellten Strukturkörper vorzugsweise auf eine Restfeuchte von etwa 10 Gewichts-% bis etwa 15 Gewichts-% durch Kühlung und Trocknung eingestellt.

Zweckmäßigerweise werden Strukturkörper erstellt, die im Mittel ein Volumen von 0,4 cm³ aufweisen. Ferner weisen die Strukturkörper im Mittel eine Dichte von 0,9 g/cm³ auf. Die Salzkonzentration der Strukturkörper beträgt etwa 8 Gewichts-% bis etwa 20 Gewichts-%, vorzugsweise etwa 11 Gewichts-% bis etwa 17 Gewichts-%.

Der erfindungsgemäße Strukturkörper zeichnet sich insbesondere dadurch aus, dass derselbe durch eine Mischung aus zumindest einer organischen Düngerkomponente, die ihrerseits organische Fasern enthält, und zumindest einer mineralischen Düngerkomponente, gebildet ist, wobei durch Pressen des gebildeten Stoffgemisches aufgrund Zugabe eines flüssigen und/oder pulverförmigen Härtemittels bereits während der Erstellung der Mischung und/oder während des Pressvorganges eine teilweise Lösung der mineralischen Düngesalze der zumindest einen mineralischen Düngerkomponente im Restwasser der Organik und des etwaigen flüssigen Härtemittels zu verzeichnen ist und wenigstens an den Kreuzungspunkten, vorzugsweise an den Kreuzungspunkten und auf der Oberfläche der organischen Fasern Salzionen der mineralischen Düngerkomponente angelegt und Salzbrücken geschaffen sind, die eine stabile Trägerstruktur für die Düngerkomponenten ausbilden, und wobei in gebildete Hohlräume und/oder Beabstandungen zwischen den organischen Fasern ungelöste Düngesalze respektive Salzkristalle der zumindest einen mineralischen Düngerkomponente eingelagert sind.

Die organische/n Düngerkomponente/n kann/können hierbei durch Geflügel-, Schweine-, Rinderdung, Gärreste aus Biogasanlagen o. a., Stroh, Kompost, wie reine Komposte aus organischen Abfällen, und/oder Substraten von Pilzkulturen gebildet sein.

Was die mineralische/n Düngerkomponente/n anbelangt, kann/können diese durch Stickstoffl(N)-Komponenten, Phosphat/(P₂O₅)-Komponenten und/oder Kalium /(K₂O)-Komponenten gebildet sein.

Die organischen Fasern der zumindest einen organischen Düngerkomponente sind vorzugsweise durch Zellstoff/Lignin-Fasern gebildet.

Das Härtemittel kann hierbei ein Härtemittel auf Eiweiß-, Stärke-, Zucker-, Zellulose-und/oder Ligninbasis sein.

Der Strukturkörper kann des Weiteren Zumengen von Magnesium/(Mg)- und/oder Schwefel/(S)-Komponenten und/oder diversen Spurenelementen aufweisen. Ebenso kann es vorteilhaft sein, wenn der Strukturkörper beigemischte aktive Mikroorganismen und/oder deren Dauerformen aufweist.

Der fertige Strukturkörper weist bevorzugt eine Restfeuchte von etwa 10 Gewichts-% bis etwa 15 Gewichts-% auf.

Zweckmäßigerweise ist der Strukturkörper zu handelsüblichen Pellets oder Granulaten durch geeignete Teilung und Formgebung des erzeugten Stoffgemisches geformt, wobei derselbe im Mittel ein Volumen von 0,4 cm³, eine Dichte von 0,9 g/cm³ sowie eine Salzkonzentration von etwa 8 Gewichts-% bis etwa 20 Gewichts-%, vorzugsweise etwa 11 Gewichts-% bis etwa 17 Gewichts-% aufweisen kann.

Der Strukturkörper ist bevorzugt zur Einarbeitung in ein Pflanzsubstrat, wie insbesondere einen Ackerboden, und zur temporären Steuerbarkeit der Nährstoffabgabe an die Pflanzen in Abhängigkeit von den unterschiedlichsten Vegetationszyklen, wie Winter- oder Frühjahrsaussaat geeignet respektive verwendbar, wobei bei Einmaldüngung über die gesamte Vegetationsperiode die erweiterte Grundversorgung der jeweiligen Pflanze respektive Fruchtart gewährleistet ist.

Die Erfindung wird nachstehend anhand eines in den Zeichnungen schematisch dargestellten Ausführungsbeispieles näher erläutert. Es zeigen:
Fig. 1 ein Fließschema zum erfindungsgemäßen Verfahren,
Fig. 2 einen erfindungsgemäß ausgebildeten Strukturkörper, und
Fig. 3 die Einzelheit ₙZ^{u} nach Fig. 1.

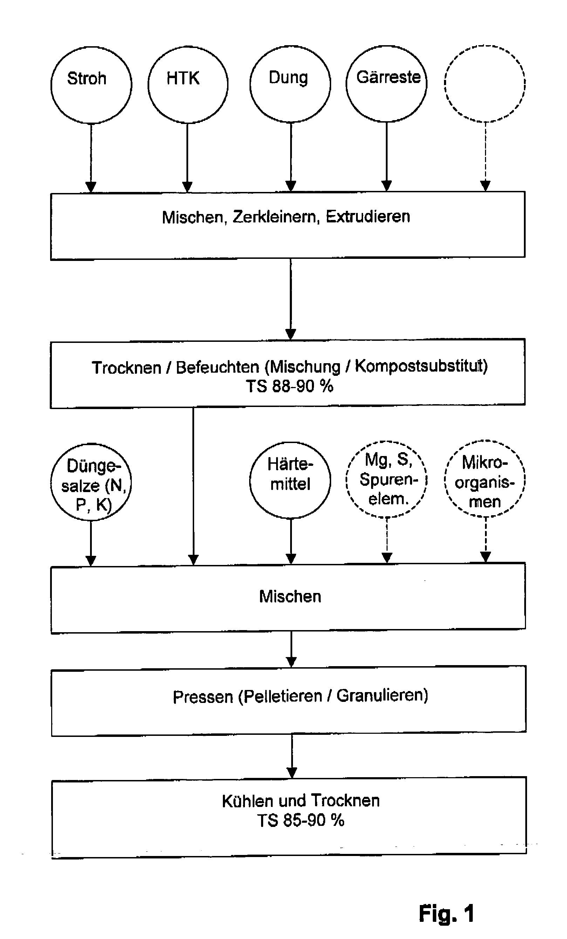

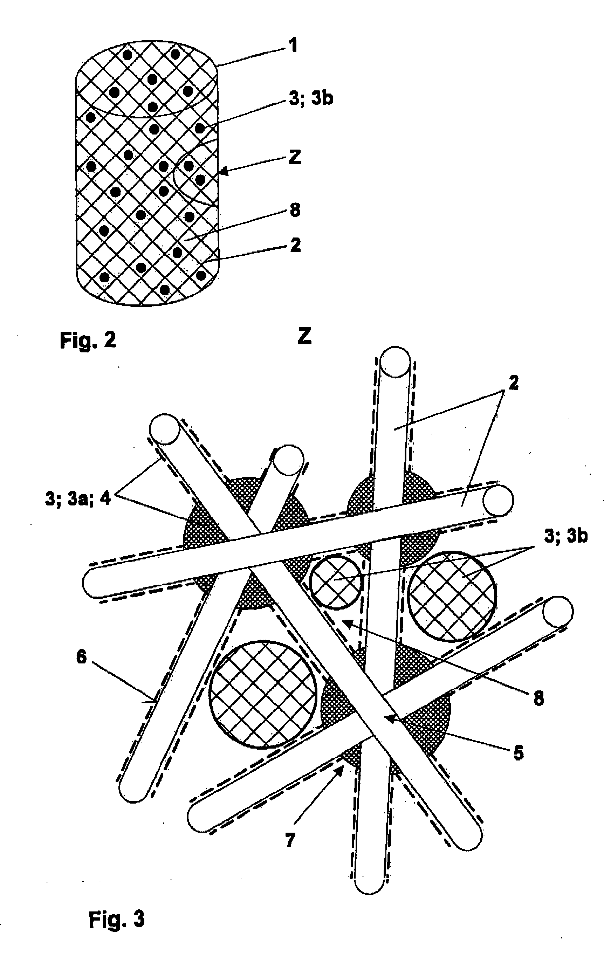

Gemäß Fig. 1 geht die Erfindung von dem an sich bekannten Verfahren der Pelletierung bzw. Pressgranulierung als Basisverfahren zur Herstellung von Strukturkörpern 1 (vgl. Fig. 2) aus organischen und mineralischen Düngerkomponenten aus.

Danach werden zunächst eine oder mehrere, gegebenenfalls vorab zerkleinerte, extrudierte und untereinander gemischte organische Düngerkomponenten, die ihrerseits organische Fasern 2 enthalten (vgl. Fig. 2, 3), mit zumindest einer mineralischen Düngerkomponente, die überwiegend mineralische Düngesalze 3 (vgl. Fig. 2, 3) umfasst, gemischt.

Als organische Düngerkomponenten bieten sich dabei Geflügeldung, wie beispielsweise Hühnertrockenkot (HTK), Schweine-, Rinderdung, Gärreste aus beispielsweise Biogasanlagen o. a. Anlagen, Stroh, Kompost, wie reine Komposte aus organischen Abfällen, Substrate von Pilzkulturen und dgl. mehr an, wobei die organischen Fasern 2 im Wesentlichen durch Zellstoff/Lignin-Fasern gebildet sind.

In umfangreichen Versuchen wurde gefunden, dass vorteilhafterweise die besagten organischen Düngerkomponenten bzw. deren Mischung als Trockensubstanz (TS) auf eine Restfeuchte von etwa 10 Gewichts-% bis etwa 12 Gewichts-% durch Trocknung oder auch Befeuchtung einzustellen ist, um die nachfolgenden Verfahrensschritte besonders zufriedenstellend durchführen zu können.

Was die mineralischen Düngerkomponenten anbelangt, sind diese hinlänglich bekannt und setzen sich im Wesentlichen aus Stickstoff/(N)-Komponenten, Phosphat/(P₂O₅)-Komponenten und/oder Kalium/(K₂O)-Komponenten zusammen.

Gegebenenfalls kann es angezeigt sein, in Abhängigkeit von den zu düngenden Pflanzen bzw. der Fruchtart, der Mischung Zumengen von Magnesium/(Mg)- und/oder Schwefel/(S)-Komponenten und/oder diversen Spurenelementen beizugeben.

Ebenso kann es vorteilhaft sein, besagter Mischung an sich bekannte geeignete aktive Mikroorganismen und/oder deren Dauerformen beizumischen, um den Aufschluss der Düngerkomponenten bzw. des daraus hergestellten Strukturkörpers 1 zu steuern bzw. vorteilhaft zu unterstützen und/oder die Bodenqualität nachhaltig zu verbessern.

Um einen Strukturkörper 1 (vgl. Fig. 2) zu erhalten, der aufgabengemäß nachhaltig lager- und transportfähig ist sowie mit handelsüblicher Streutechnik ausgebracht werden kann, ist es erforderlich, eine entsprechend stabile Trägerstruktur des Strukturkörpers 1 zu schaffen.

Zur Erzielung einer solchen stabilen Trägerstruktur ist nunmehr vorgesehen, dass bereits während der Erstellung der Mischung aus organischen Düngerkomponenten und/oder während des nachfolgenden Pressvorganges ein flüssiges und/oder pulverförmiges Härtemittel 4 derart der Mischung zugegeben wird, dass während des Pressvorganges eine teilweise Lösung der mineralischen Düngesalze 3 der verwendeten mineralischen Düngerkomponenten im Restwasser der Organik und des etwaigen flüssigen Härtemittels 4 erfolgt und wenigstens an den Kreuzungspunkten 5, vorzugsweise an den Kreuzungspunkten 5 und auf der Oberfläche 6 der organischen Fasern 2 Salzionen 3a der mineralischen Düngerkomponenten angelegt und Salzbrücken 7, bestehend aus den gelösten Düngesalzen respektive Salzionen 3a und dem Härtemittel 4 geschaffen werden.

In die gebildeten Hohlräume 8 und/oder Beabstandungen zwischen den organischen Fasern 2 werden dann die ungelösten Düngesalze 3b respektive Salzkristalle eingelagert.

Als Härtemittel 4 haben sich an sich bekannte und demgemäß nicht näher zu beschreibende Härtemittel 4 auf Eiweiß-, Stärke-, Zucker-, Zellulose- und/oder Ligninbasis bewährt.

Ist der Pressvorgang, einhergehend mit der Pelletierung bzw. Granulierung sowie einer nicht unbeträchtlichen Wärmeentwicklung, abgeschlossen, werden die Strukturkörper 1 in Form von Pellets, Granulaten oder anderen geeigneten Formgebungen einer passiven und/oder aktiven Kühlung unterzogen, wodurch eine Trocknung zu verzeichnen ist, die gegebenenfalls noch durch eine aktive Trocknung durch nachträglichen Wärmeeintrag und/oder Umspülung mit trockener Luft Ergänzung finden kann.

Besagte Kühlung, einhergehend mit einer Trocknung wird derart gesteuert, dass für die Trockensubstanz (TS) bzw. den Strukturkörper 1 eine Restfeuchte von etwa 10 Gewichts-% bis etwa 15 Gewichts-% eingestellt ist.

Die Strukturkörper 1 weisen danach im Mittel ein Volumen von 0,4 cm³, eine Dichte von 0,9 g/cm³ und eine Salzkonzentration von etwa 8 Gewichts-% bis etwa 20 Gewichts-%, vorzugsweise etwa 11 Gewichts-% bis etwa 17 Gewichts-% auf.

Im Ergebnis ist ein Strukturkörper 1 mit einem irreversiblen Organik-Raumgitter geschaffen, welches stabil sowohl die angelösten als auch die kristallinen Düngesalze 3 bindet, wobei über den Querschnitt des Strukturkörpers 1 gesehen, weitestgehend gleiche Material-Eigenschaften zu verzeichnen sind, wodurch eine separat erstellte Hüllenstruktur, wie sie der Stand der Technik vorsieht, entbehrlich ist. Der Strukturkörper 1 ist an bestimmte Lager- und Transporthaltung in weiten Grenzen durch die gewählten Beimischungen anpassbar. Ein Brechen einer Hüllenstruktur gemäß dem Stand der Technik, die den Kern freisetzen würde, ist ausgeschlossen.

Die Stabilität dieser Strukturkörper 1 kann nur aufgebrochen werden, wenn nach Einarbeitung derselben in ein Pflanzsubstrat, wie einem Ackerboden, durch die so verbesserte Bodenbiologie sowie durch eine pflanzenwachstumsgebundene hohe Aktivität der endogenen Bodenbiozönose ein biochemischer Prozess die geschaffene Struktur auflöst mit der Abgabe gelöster Minerale zur Pflanzenemährung einhergehend mit einer Freisetzung zusätzlicher organisch gebundener Nährstoffe, insbesondere von Stickstoff. Gleichzeitig wird so der Humus angereichert. Die Nährstoffabgabe an die Pflanzen ist in Abhängigkeit von den unterschiedlichsten Vegetationszyklen, wie Winter- oder Frühjahrsaussaat, und/oder unterschiedlichen Vegetationszonen in vorteilhafter Weise temporär steuerbar.

Mittels eines derartigen Strukturkörpers 1 sind Wirkungen erzielbar, die bei Einmaldüngung über die gesamte Vegetationsperiode die erweiterte Grundversorgung der Pflanzen respektive Fruchtarten gewährleisten.

Das so entstehende dynamische Mineralisierungsgleichgewicht funktioniert insbesondere auch dadurch, dass Pflanzenwurzeln mit den Dünger-Strukturkörpern 1 ein System mit Hydroponikeffekt bilden (Umschlingung der Strukturkörper - Pellets, Granulate, etc. durch die Wurzeln).

Mit Dünger-Strukturkörpern 1 der erfindungsgemäßen Art ist beispielsweise bei einem NPK-Aufwand von 8-5-9 eine Wirkung von 16-8-15 im Vergleich zur herkömmlichen Düngetechnologie erzielbar, mit einer Ersparnis bei N von 50%, bei P₂O₅ von 40% und bei K₂O von 40%.

## Patentansprüche

1. Verfahren zur Herstellung von Strukturkörpern (1) aus organischen und mineralischen Düngerkomponenten, **gekennzeichnet durch** folgende nacheinander durchzuführende Verfahrensschritte:
a) Mischung zumindest einer organischen Düngerkomponente, die ihrerseits organische Fasern (2) enthält, mit zumindest einer mineralischen Düngerkomponente;
b) Pressen des gebildeten Stoffgemisches, wobei bereits bei Erstellung der Mischung gemäß Verfahrensschritt a) und/oder während des Pressvorganges der Mischung ein flüssiges und/oder pulverförmiges Härtemittel (4) derart zugegeben wird, dass während des Pressvorganges eine teilweise Lösung der mineralischen Düngesalze (3) der zumindest einen mineralischen Düngerkomponente im Restwasser der Organik und des etwaigen flüssigen Härtemittels (4) erfolgt und wenigstens an den Kreuzungspunkten, (5) vorzugsweise an den Kreuzungspunkten (5) und auf der Oberfläche (6) der organischen Fasern (2) Salzionen (3a) der mineralischen Düngerkomponente angelegt und Salzbrücken (7) geschaffen werden, die eine stabile Trägerstruktur für die Düngerkomponenten derart bilden, dass in gebildete Hohlräume (8) und/oder Beabstandungen zwischen den organischen Fasern (2) ungelöste Düngesalze (3b) respektive Salzkristalle der zumindest einen mineralischen Düngerkomponente eingelagert werden;
c) Erstellung handelsüblicher Strukturkörper (1) respektive Pellets oder Granulate **durch** geeignete Teilung und Formgebung des erzeugten Stoffgemisches; und
d) Kühlung und/oder Trocknung der erstellten Strukturkörper (1).

2. Verfahren nach Anspruch 1,
**dadurch gekennzeichnet, dass**
im Hinblick auf den Verfahrensschritt a) die verwendete zumindest eine organische Düngerkomponente vor Mischung mit der zumindest einen mineralischen Düngerkomponente auf eine Restfeuchte von etwa 10 Gewichts- % bis etwa 12 Gewichts-% durch Trocknung oder Befeuchtung eingestellt wird.

3. Verfahren nach Anspruch 1 oder 2,
**dadurch gekennzeichnet, dass**
im Hinblick auf den Verfahrensschritt a) als organische Düngerkomponente/n Geflügel-, Schweine-, Rinderdung, Gärreste aus Biogasanlagen o. a., Stroh, Kompost, wie reine Komposte aus organischen Abfällen, und/oder Substrate von Pilzkulturen verwendet werden.

4. Verfahren nach einem der Ansprüche 1 bis 3,
**dadurch gekennzeichnet, dass**
im Hinblick auf den Verfahrensschritt a) als mineralische Düngerkomponente/n Stickstoff/(N)-Komponenten, Phosphat/(P₂O₅)-Komponenten und/oder Kaliuml(K₂O)-Komponenten verwendet werden.

5. Verfahren nach einem der Ansprüche 1 bis 4,
**dadurch gekennzeichnet, dass**
im Hinblick auf den Verfahrensschritt a) in die Mischung Zumengen von Magnesium/(Mg)- und/oder Schwefel/(S)-Komponenten und/oder diversen Spurenelementen gegeben werden.

6. Verfahren nach einem der Ansprüche 1 bis 5,
**dadurch gekennzeichnet, dass**
im Hinblick auf den Verfahrensschritt a) die organischen Fasern (2) der zumindest einen organischen Düngerkomponente durch Zellstoff/Lignin-Fasern gebildet werden.

7. Verfahren nach Anspruch 1,
**dadurch gekennzeichnet, dass**
im Hinblick auf den Verfahrensschritt b) ein Härtemittel (4) auf Eiweiß-, Stärke-, Zucker-, Zellulose- und/oder Ligninbasis verwendet wird.

8. Verfahren nach Anspruch 1,
**dadurch gekennzeichnet, dass**
im Hinblick auf den Verfahrensschritt b) aktive Mikroorganismen und/oder deren Dauerformen beigemischt werden.

9. Verfahren nach Anspruch 1,
**dadurch gekennzeichnet, dass**
im Hinblick auf den Verfahrensschritt d) die erstellten Strukturkörper (1) auf eine Restfeuchte von etwa 10 Gewichts-% bis etwa 15 Gewichts-% durch Kühlung und Trocknung eingestellt werden.

10. Verfahren nach einem der Ansprüche 1 bis 9,
**dadurch gekennzeichnet, dass**
Strukturkörper (1) erstellt werden, die im Mittel ein Volumen von 0,4 cm³ aufweisen.

11. Verfahren nach einem der Ansprüche 1 bis 10,
**dadurch gekennzeichnet, dass**
Strukturkörper (1) erstellt werden, die im Mittel eine Dichte von 0,9 g/cm³ aufweisen.

12. Verfahren nach einem der Ansprüche 1 bis 11,
**dadurch gekennzeichnet, dass**
Strukturkörper (1) erstellt werden, deren Salzkonzentration etwa 8 Gewichts-% bis etwa 20 Gewichts-%, vorzugsweise etwa 11 Gewichts-% bis etwa 17 Gewichts-% beträgt.

13. Strukturkörper (1), gebildet durch eine Mischung aus zumindest einer organischen Düngerkomponente, die ihrerseits organischen Fasern (2) enthält, und zumindest einer mineralischen Düngerkomponente, wobei durch Pressen des gebildeten Stoffgemisches aufgrund Zugabe eines flüssigen und/oder pulverförmigen Härtemittels (4) bereits während der Erstellung der Mischung und/oder während des Pressvorganges eine teilweise Lösung der mineralischen Düngesalze (3) der zumindest einen mineralischen Düngerkomponente im Restwasser der Organik und des etwaigen flüssigen Härtemittels (4) zu verzeichnen ist und wenigstens an den Kreuzungspunkten (5), vorzugsweise an den Kreuzungspunkten (5) und auf der Oberfläche (6) der organischen Fasern (2) Salzionen (3a) der mineralischen Düngerkomponente angelegt und Salzbrücken (7) geschaffen sind, die eine stabile Trägerstruktur für die Düngerkomponenten ausbilden, und wobei in gebildete Hohlräume (8) und/oder Beabstandungen zwischen den organischen Fasern (2) ungelöste Düngesalze (3b) respektive Salzkristalle der zumindest einen mineralischen Düngerkomponente eingelagert sind.

14. Strukturkörper (1) nach Anspruch 13,
**dadurch gekennzeichnet, dass**
die organische/n Düngerkomponente/n durch Geflügel-, Schweine-, Rinderdung, Gärreste aus Biogasanlagen o. a., Stroh, Kompost, wie reine Komposte aus organischen Abfällen, und/oder Substraten von Pilzkulturen gebildet ist/sind.

15. Strukturkörper (1) nach Anspruch 13 oder 14,
**dadurch gekennzeichnet, dass**
die mineralische/n Düngerkomponente/n durch Stickstoff/(N)-Komponenten, Phosphat/(P₂O₅)-Komponenten und/oder Kalium/(K₂O)-Komponenten gebildet ist/sind.

16. Strukturkörper (1) nach einem der Ansprüche 13 bis 15,
**dadurch gekennzeichnet, dass**
die organischen Fasern (2) der zumindest einen organischen Düngerkomponente durch Zellstoff/Lignin-Fasern gebildet sind.

17. Strukturkörper (1) nach einem der Ansprüche 13 bis 16,
**dadurch gekennzeichnet, dass**
das Härtemittel (4) ein Härtemittel (4) auf Eiweiß-, Stärke-, Zucker-, Zellulose- und/oder Ligninbasis ist.

18. Strukturkörper (1) nach einem der Ansprüche 13 bis 17,
**dadurch gekennzeichnet, dass**
der Strukturkörper (1) Zumengen von Magnesium/(Mg)- und/oder Schwefel/(S)-Komponenten und/oder diversen Spurenelementen aufweist.

19. Strukturkörper (1) nach einem der Ansprüche 13 bis 18,
**dadurch gekennzeichnet, dass**
der Strukturkörper (1) beigemischte aktive Mikroorganismen und/oder deren Dauerformen aufweist.

20. Strukturkörper (1) nach einem der Ansprüche 13 bis 19,
**dadurch gekennzeichnet, dass**
der fertige Strukturkörper (1) eine Restfeuchte von etwa 10 Gewichts-% bis etwa 15 Gewichts-% aufweist.

21. Strukturkörper (1) nach einem der Ansprüche 13 bis 20,
**dadurch gekennzeichnet, dass**
der Strukturkörper (1) zu handelsüblichen Pellets oder Granulaten durch geeignete Teilung und Formgebung des erzeugten Stoffgemisches geformt ist.

22. Strukturkörper (1) nach einem der Ansprüche 13 bis 21,
**dadurch gekennzeichnet; dass**
der Strukturkörper (1) im Mittel ein Volumen von 0,4 cm³ aufweist.

23. Strukturkörper (1) nach einem der Ansprüche 13 bis 22,
**dadurch gekennzeichnet, dass**
der Strukturkörper (1) im Mittel eine Dichte von 0,9 g/cm³ aufweist.

24. Strukturkörper (1) nach einem der Ansprüche 13 bis 23,
**dadurch gekennzeichnet, dass**
der Strukturkörper (1) eine Salzkonzentration von etwa 8 Gewichts-% bis etwa 20 Gewichts-%, vorzugsweise etwa 11 Gewichts-% bis etwa 17 Gewichts-% aufweist.

25. Verwendung des Strukturkörpers (1) nach einem der Ansprüche 13 bis 24 zur Einarbeitung in ein Pflanzsubstrat, wie insbesondere einen Ackerboden, und zur temporären Steuerbarkeit der Nährstoffabgabe an die Pflanzen in Abhängigkeit von den unterschiedlichsten Vegetationszyklen, wie Winter- oder Frühjahrsaussaat.

26. Verwendung des Strukturkörpers (1) nach Anspruch 25 derart, dass bei Einmaldüngung über die gesamte Vegetationsperiode die erweiterte Grundversorgung der jeweiligen Pflanze respektive Fruchtart gewährleistet ist.
